# EUROPEAN PATENT APPLICATION

(11) **EP 3 338 539 A1**
(43) Date of publication of application: **27.06.2018**
(21) Application number: 16841669.1
(22) Date of filing: 25.08.2016
(51) Int. Cl.: A01G 9/08

(54) **PLANT TRANSPLANTATION APPARATUS**

(30) Priority: 03.09.2015 JP 2015173865
(71) Applicant: Tsubakimoto Chain Co., Osaka-shi, Osaka 530-0005 (JP)
(72) Inventor: ITO, Go, Osaka-shi, Osaka 530-0005 (JP); KINOSHITA, Yuji, Osaka-shi, Osaka 530-0005 (JP); HIRAI, Tatsuya, Osaka-shi, Osaka 530-0005 (JP); MATSUDA, Hirotaka, Osaka-shi, Osaka 530-0005 (JP)
(74) Representative: Prüfer & Partner mbB Patentanwälte · Rechtsanwälte
(86) International application number: PCT/JP2016/074848
(87) International publication number: WO 2017/038637

(57) **Abstract**

A seedbed supporting member and a panel supporting member (150) are configured such that, in a state where a seedbed held in a first seedbed holding member (110a) and a through hole portion of a first panel (120a) overlap with each other, a seedbed held in a second seedbed holding member (110b) and a through hole portion of a second panel, which correspond to this seedbed and this through hole portion, respectively, overlap with each other. An arrangement spacing in a first direction between the through hole portion of the first panel (120a) and the through hole portion of the second panel (120b) corresponding to each other is equal to an arrangement spacing in the first direction between a first transplantation arm (130a) and a second transplantation arm (130b).

## Description

### TECHNICAL FIELD

The present invention relates to a plant transplantation apparatus, and particularly to a plant transplantation apparatus in which a spacing between adjacent plants is changed in accordance with the growth of the plants.

### BACKGROUND ART

Japanese Patent Laying-Open No. 2000-4699 (PTD 1) is a prior art document which discloses a configuration of an automatic planting apparatus for a hydroponic seedling. The automatic planting apparatus for a hydroponic seedling described in PTD 1 includes: a seedbed transporting conveyor configured to rotate intermittently and reciprocate to the right and left to transport a hydroponic seedbed; a planting panel transporting conveyor provided below the seedbed transporting conveyor and configured to rotate intermittently to transport a planting panel; several transportation opening/closing nippers positioned above a front end portion of the seedbed transporting conveyor and configured to nip and separate and transport forward the bed pieces every several pieces in a front end row of the hydroponic seedbed on the seedbed transporting conveyor, respectively; several insertion opening/closing nippers positioned in front of the several transportation opening/closing nippers and configured to nip and move down the bed pieces transported by the transportation opening/closing nippers, and insert and plant the bed pieces into hole portions of the planting panel on the planting panel transporting conveyor; and an actuation mechanism coupled to the seedbed transporting conveyor and configured to intermittently reciprocate the seedbed transporting conveyor in the right and left direction by a width of the bed piece of the hydroponic seedbed. The planting panel into which the bed pieces have been planted is sequentially delivered onto a tray from a front end of the planting panel transporting conveyor.

### CITATION LIST

### PATENT DOCUMENT

PTD 1: Japanese Patent Laying-Open No. 2000-4699

### SUMMARY OF INVENTION

### TECHNICAL PROBLEM

In the automatic planting apparatus for a hydroponic seedling described in PTD 1, the bed pieces of the hydroponic seedbed are separated every several pieces by the plurality of transportation opening/closing nippers and supplied to the plurality of insertion opening/closing nippers, and the plurality of insertion opening/closing nippers plant the bed pieces to one planting panel, thereby enhancing the work efficiency. Generally, a spacing between the plurality of hole portions provided in the planting panel for receiving the bed pieces is set to have various dimensions in accordance with the type and growth stage of a seedling. Therefore, it is necessary to transplant a seedling into a plurality of types of planting panels having different spacings between hole portions.

In the automatic planting apparatus for a hydroponic seedling described in PTD 1, the bed pieces of the hydroponic seedbed are separated every several pieces by the plurality of transportation opening/closing nippers. Therefore, a spacing between the hole portions of the planting panel can be changed only into a spacing that is an integer multiple of an arrangement spacing between the bed pieces of the hydroponic seedbed.

In addition, the plurality of insertion opening/closing nippers simultaneously plant the plurality of bed pieces to one planting panel, thereby reducing the time required for planting to one planting panel. Therefore, in order to achieve continuous planting, a work interval for an operator to remove the planting panel delivered onto the tray becomes shorter. As a result, the operator must more frequently access the automatic planting apparatus for a hydroponic seedling and remove one planting panel in which planting of the hydroponic seedling has ended, which increases the operator's burden.

The present invention has been made in view of the above-described problem, and an object of the present invention is to provide a plant transplantation apparatus that can be adapted to various seedlings with increased flexibility of a spacing between hole portions of a panel into which a seedbed is transplanted, and can suppress an increase in operator's burden while enhancing the work efficiency.

### SOLUTION TO PROBLEM

A plant transplantation apparatus according to the present invention is a plant transplantation apparatus that transfers seedbeds from a first seedbed holding member and a second seedbed holding member to a first panel and a second panel, respectively, the first seedbed holding member being configured to hold a seedbed group in which a plurality of seedbeds arranged at regular spacings in a first direction are continuous in a matrix manner, the second seedbed holding member having a configuration identical to that of the first seedbed holding member, the first panel having a plurality of through hole portions provided in a matrix manner at regular spacings in the first direction, the second panel having a configuration identical to that of the first panel. The plant transplantation apparatus includes: a seedbed supporting member configured to support the first seedbed holding member and the second seedbed holding member in a state where the first seedbed holding member and the second seedbed holding member are spaced apart from each other and aligned in the first direction; a panel supporting member configured to support the first panel and the second panel in a state where the first panel and the second panel are spaced apart from each other and aligned in the first direction; a first transplantation arm configured to move the seedbeds one by one in a vertical direction from the seedbed group held in the first seedbed holding member, and transfer the seedbeds to the plurality of through hole portions of the first panel, respectively; a second transplantation arm spaced apart from the first transplantation arm in the first direction and configured to move the seedbeds one by one in the vertical direction from the seedbed group held in the second seedbed holding member, and transfer the seedbeds to the plurality of through hole portions of the second panel, respectively; and a first horizontal movement mechanism configured to change a relative positional relationship in a horizontal direction between the seedbed supporting member and the panel supporting member. The seedbed supporting member and the panel supporting member are configured such that, in a state where one seedbed of the seedbed group held in the first seedbed holding member and one through hole portion of the first panel overlap with each other when viewed from the vertical direction, one seedbed of the seedbed group held in the second seedbed holding member and one through hole portion of the second panel, which correspond to the seedbed and the through hole portion, respectively, overlap with each other. An arrangement spacing in the first direction between the through hole portion of the first panel and the through hole portion of the second panel corresponding to each other is equal to an arrangement spacing in the first direction between the first transplantation arm and the second transplantation arm.

In one aspect of the present invention, the first transplantation arm and the second transplantation arm are configured to be both connected to one second horizontal movement mechanism so as to move horizontally in an integral manner.

In one aspect of the present invention, the panel supporting member is fixedly arranged so as to support an edge portion of each of the first panel and the second panel. The seedbed supporting member is configured to be connected to the first horizontal movement mechanism so as to be horizontally movable.

In one aspect of the present invention, the seedbed supporting member is positioned above the panel supporting member.

In one aspect of the present invention, the first transplantation arm and the second transplantation arm are configured to be connected to vertical movement mechanisms, respectively, so as to be separately vertically movable.

### ADVANTAGEOUS EFFECTS OF INVENTION

According to the present invention, the plant transplantation apparatus can be adapted to various seedlings with increased flexibility of a spacing between hole portions of a panel into which a seedbed is transplanted, and can suppress an increase in operator's burden while enhancing the work efficiency.

### BRIEF DESCRIPTION OF DRAWINGS

Fig. 1 is a perspective view showing an outer appearance of a plant transplantation apparatus according to one embodiment of the present invention.
Fig. 2 is a front view of the plant transplantation apparatus in Fig. 1 viewed from an arrow II direction.
Fig. 3 is a plan view showing a configuration of a seedbed supporting member and a first horizontal movement mechanism included in the plant transplantation apparatus according to one embodiment of the present invention.
Fig. 4 is a perspective view showing an outer appearance of one example of a seedbed holding member.
Fig. 5 is a plan view of the seedbed holding member in Fig. 4 viewed from an arrow V direction.
Fig. 6 is a front view of the seedbed holding member in Fig. 4 viewed from an arrow VI direction.
Fig. 7 is a perspective view showing an outer appearance of one example of a seedbed group.
Fig. 8 is an enlarged perspective view showing a VIII portion of the seedbed group in Fig. 7.
Fig. 9 is a perspective view showing a state in which the seedbed group is held in the seedbed holding member.
Fig. 10 is a plan view showing an outer appearance of one example of a panel.
Fig. 11 is a cross-sectional view of the panel in Fig. 10 viewed from an XI-XI line arrow direction.
Fig. 12 is a perspective view showing an outer appearance of a transplantation arm included in the plant transplantation apparatus according to one embodiment of the present invention.
Fig. 13 is an enlarged perspective view showing an XIII portion of the transplantation arm in Fig. 12.
Fig. 14 is a cross-sectional view of the transplantation arm in Fig. 12 viewed from an XIV-XIV line arrow direction.
Fig. 15 is a perspective view showing a state in which a gripping portion of the transplantation arm included in the plant transplantation apparatus according to one embodiment of the present invention is closed.
Fig. 16 is a plan view showing an arrangement relationship among a first seedbed holding member, a first panel and a first transplantation arm, an arrangement relationship among a second seedbed holding member, a second panel and a second transplantation arm, and an arrangement relationship among a third seedbed holding member, a third panel and a third transplantation arm in the plant transplantation apparatus according to one embodiment of the present invention.
Fig. 17 is a cross-sectional view showing a state in which the seedbed to be transplanted and a through hole portion of the panel which is a transplantation destination are arranged to overlap with each other, and the transplantation arm is arranged directly therebelow in the plant transplantation apparatus according to one embodiment of the present invention.
Fig. 18 is a cross-sectional view showing a state in which the transplantation arm has moved upward and the gripping portion has passed through the through hole portion of the panel and gripped the seedbed in the plant transplantation apparatus according to one embodiment of the present invention.
Fig. 19 is a cross-sectional view showing a state in which the transplantation arm has moved downward and transplanted the seedbed into the through hole portion of the panel in the plant transplantation apparatus according to one embodiment of the present invention.
Fig. 20 is a plan view showing an arrangement relationship among the first seedbed holding member, the first panel and the first transplantation arm, an arrangement relationship among the second seedbed holding member, the second panel and the second transplantation arm, and an arrangement relationship among the third seedbed holding member, the third panel and the third transplantation arm, when an arrangement spacing between a plurality of through hole portions of the panel is changed in the plant transplantation apparatus according to one embodiment of the present invention.

### DESCRIPTION OF EMBODIMENTS

A plant transplantation apparatus according to one embodiment of the present invention will be described hereinafter with reference to the drawings. In the following description of the embodiment, the same reference characters are assigned to the same or corresponding portions in the drawings and description thereof will not be repeated. Although the plant transplantation apparatus including three seedbed holding members, three panels and three transplantation arms discussed below is described in the present embodiment, the configuration of the plant transplantation apparatus is not limited thereto. The plant transplantation apparatus may only include two or more seedbed holding members, two or more panels, and two or more transplantation arms.

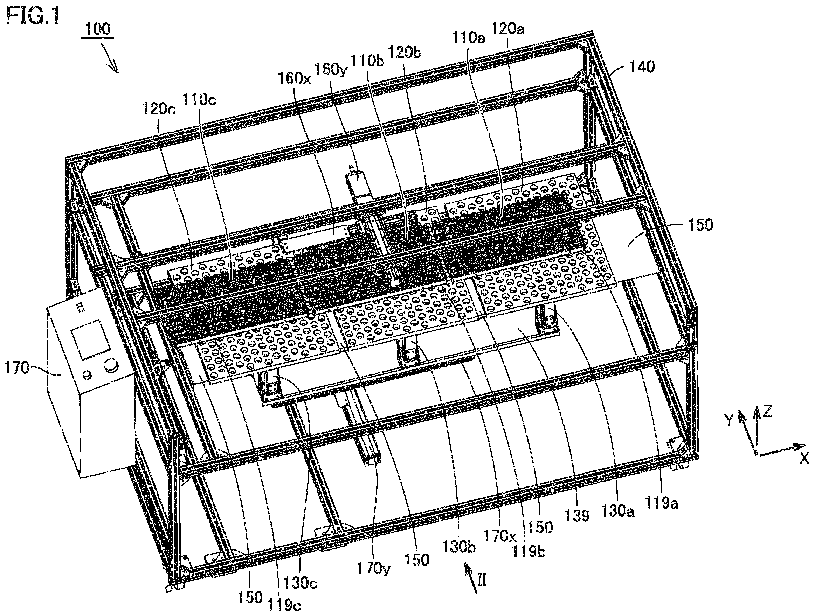

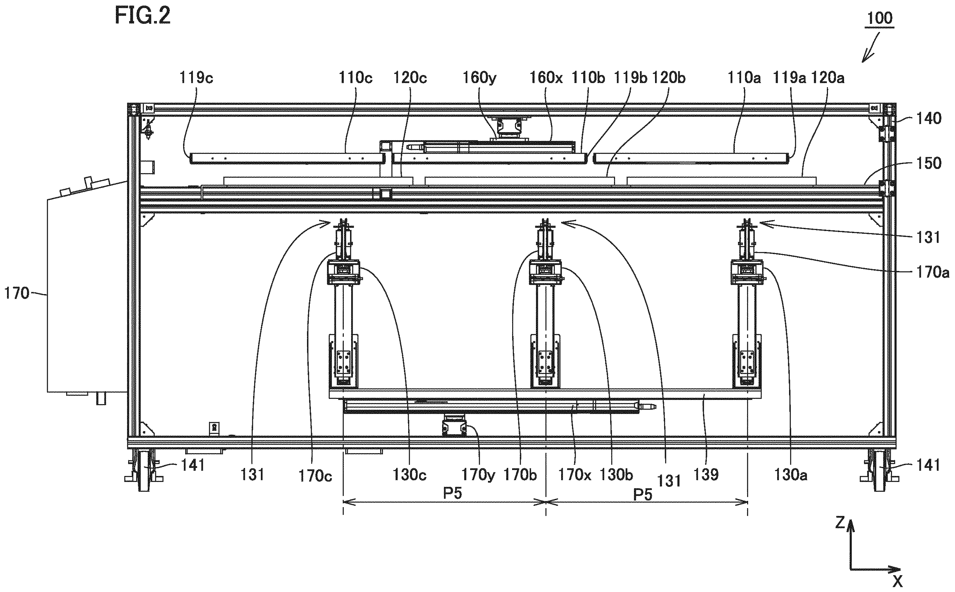

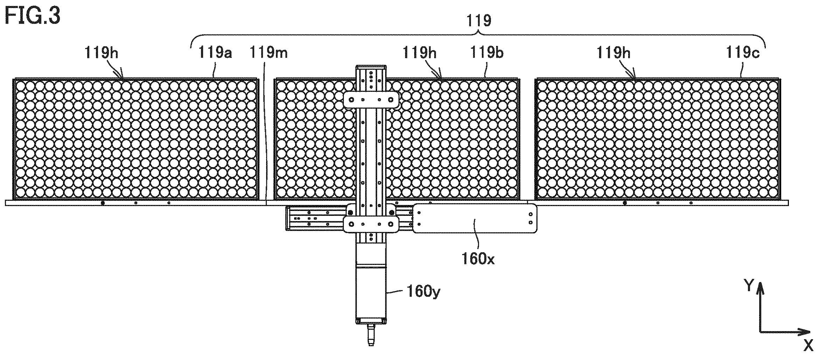

Fig. 1 is a perspective view showing an outer appearance of the plant transplantation apparatus according to one embodiment of the present invention. Fig. 2 is a front view of the plant transplantation apparatus in Fig. 1 viewed from an arrow II direction. Fig. 3 is a plan view showing a configuration of a seedbed supporting member and a first horizontal movement mechanism included in the plant transplantation apparatus according to one embodiment of the present invention. In Figs. 1 to 3, a width direction of the plant transplantation apparatus which is a first direction is shown as an X axis direction, a depth direction of the plant transplantation apparatus is shown as a Y axis direction, and a height direction of the plant transplantation apparatus is shown as a Z axis direction.

As shown in Figs. 1 to 3, a plant transplantation apparatus 100 according to one embodiment of the present invention includes a seedbed supporting member 119, a panel supporting member 150, a first transplantation arm 130a, a second transplantation arm 130b, a third transplantation arm 130c, a first horizontal movement mechanism, a second horizontal movement mechanism, vertical movement mechanisms, a frame 140, and a controller 170.

Frame 140 has a substantially rectangular parallelepiped outer shape. A plurality of transverse frames extending in the width direction (X axis direction) of plant transplantation apparatus 100, a plurality of longitudinal frames extending in the depth direction (Y axis direction) of plant transplantation apparatus 100, and four pillar frames extending in the height direction (Z axis direction) of plant transplantation apparatus 100 are connected to one another to form frame 140. A caster 141 is attached to frame 140. Frame 140 is made of a steel material such as stainless steel or a resin material such as fiber-reinforced plastic.

Seedbed supporting member 119 supports a first seedbed holding member 110a, a second seedbed holding member 110b and a third seedbed holding member 110c, each of which holds a below-described seedbed group, in a state where first seedbed holding member 110a, second seedbed holding member 110b and third seedbed holding member 110c are spaced apart from one another and aligned in the width direction (X axis direction) of plant transplantation apparatus 100.

Specifically, seedbed supporting member 119 has a rod-shaped main body portion 119m, and a first housing portion 119a, a second housing portion 119b and a third housing portion 119c that are provided at substantially equal spacings in the width direction (X axis direction) of plant transplantation apparatus 100 on main body portion 119m.

Each of first housing portion 119a, second housing portion 119b and third housing portion 119c has a rectangular parallelepiped outer shape with an upper surface being open. At the bottom of each of first housing portion 119a, second housing portion 119b and third housing portion 119c, a plurality of through hole portions 119h are provided in a matrix manner at a spacing corresponding to an arrangement spacing between a plurality of seedbeds of the below-described seedbed group. Although each of the plurality of through hole portions 119h has a circular shape in a planar view in the present embodiment, the shape may be a rectangular shape, a polygonal shape or the like.

Each of first housing portion 119a, second housing portion 119b and third housing portion 119c may have a rectangular parallelepiped outer shape with both an upper surface and a lower surface being open. That is, each of first housing portion 119a, second housing portion 119b and third housing portion 119c may be formed to have a frame shape.

Seedbed supporting member 119 is made of a steel material such as stainless steel or a resin material such as fiber-reinforced plastic.

Seedbed supporting member 119 supports first seedbed holding member 110a housed in first housing portion 119a, supports second seedbed holding member 110b housed in second housing portion 119b, and supports third seedbed holding member 110c housed in third housing portion 119c. Seedbed supporting member 119 is configured to be connected to the first horizontal movement mechanism so as to be horizontally movable.

The first horizontal movement mechanism is formed by a transverse direction linear actuator 160x configured to move seedbed supporting member 119 in the width direction (X axis direction) of plant transplantation apparatus 100, and a longitudinal direction linear actuator 160y configured to move seedbed supporting member 119 in the depth direction (Y axis direction) of plant transplantation apparatus 100. The first horizontal movement mechanism changes a relative positional relationship in the horizontal direction between seedbed supporting member 119 and panel supporting member 150.

In the present embodiment, main body portion 119m of seedbed supporting member 119 is connected to transverse direction linear actuator 160x, transverse direction linear actuator 160x is connected to longitudinal direction linear actuator 160y, and longitudinal direction linear actuator 160y is connected to the two transverse frames spaced apart from each other and positioned in parallel. Seedbed supporting member 119 is positioned above panel supporting member 150.

A configuration of each of first seedbed holding member 110a, second seedbed holding member 110b and third seedbed holding member 110c as well as a configuration of the seedbed group will now be described. The following description provides one example of each of the seedbed holding member and the seedbed group, and the configuration of each of the seedbed holding member and the seedbed group is not limited to the described configuration.

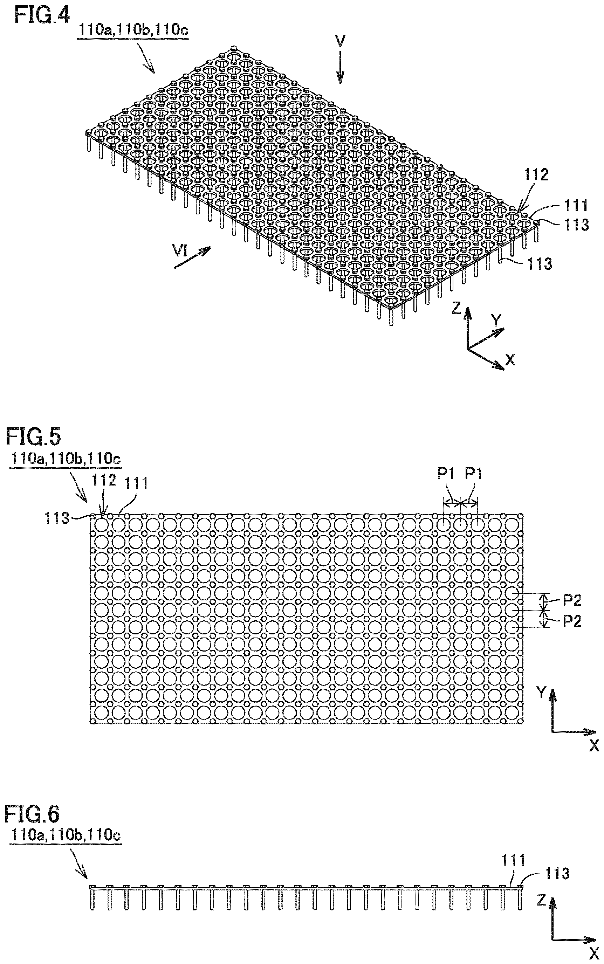

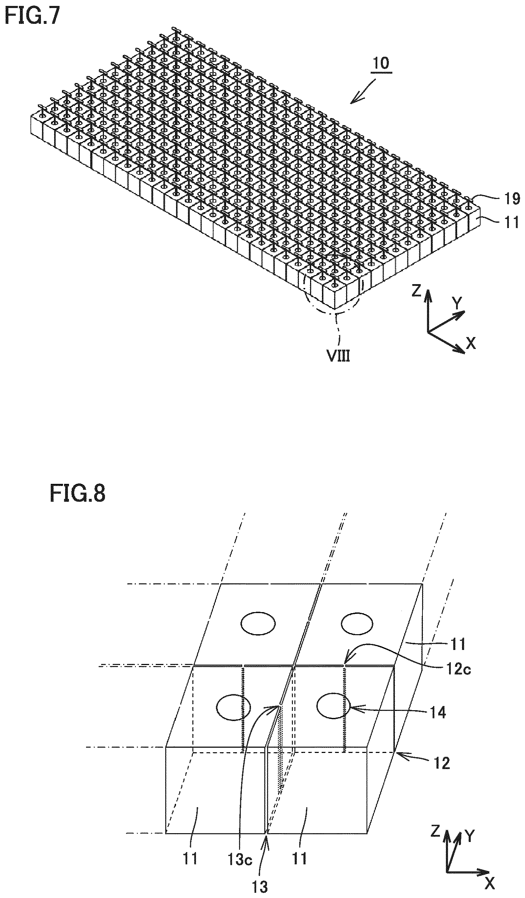

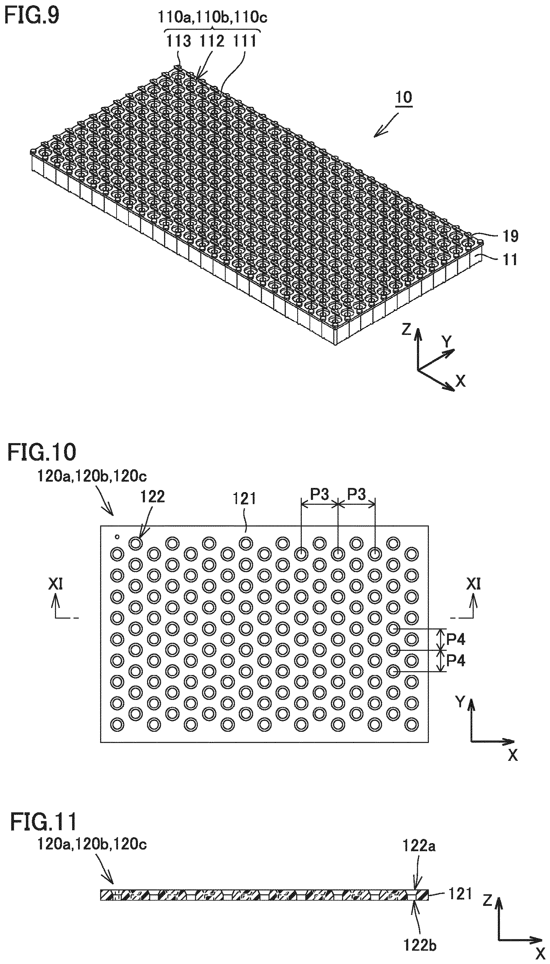

Fig. 4 is a perspective view showing an outer appearance of one example of the seedbed holding member. Fig. 5 is a plan view of the seedbed holding member in Fig. 4 viewed from an arrow V direction. Fig. 6 is a front view of the seedbed holding member in Fig. 4 viewed from an arrow VI direction. Fig. 7 is a perspective view showing an outer appearance of one example of the seedbed group. Fig. 8 is an enlarged perspective view of a VIII portion of the seedbed group in Fig. 7. Fig. 9 is a perspective view showing a state in which the seedbed group is held in the seedbed holding member. In Figs. 4 to 9, the width direction of the plant transplantation apparatus which is the first direction is shown as the X axis direction, the depth direction of the plant transplantation apparatus is shown as the Y axis direction, and the height direction of the plant transplantation apparatus is shown as the Z axis direction. In Fig. 8, a seedling is not shown and a part of the seedbed is shown as being seen through.

As shown in Figs. 4 to 6, each of first seedbed holding member 110a, second seedbed holding member 110b and third seedbed holding member 110c is formed by a flat plate portion 111, and a plurality of pins 113 penetrating through flat plate portion 111 and fitted and fixed to flat plate portion 111. In flat plate portion 111, a plurality of through hole portions 112 are provided in a matrix manner at a spacing corresponding to an arrangement spacing between a plurality of seedbeds of the below-described seedbed group.

Specifically, the plurality of through hole portions 112 are arranged at a spacing P1 in the width direction (X axis direction) of plant transplantation apparatus 100 and are arranged at a spacing P2 in the depth direction (Y axis direction) of plant transplantation apparatus 100. Spacing P1 and spacing P2 may be equal to or different from each other. Although each of the plurality of through hole portions 112 has a circular shape in a planar view in the present embodiment, the shape may be a rectangular shape, a polygonal shape or the like.

In a planar view, the plurality of pins 113 are arranged to be positioned at the center of an imaginary rectangular shape formed by connecting the centers of four through hole portions 112. The plurality of pins 113 are also arranged at the same spacings at an edge portion of flat plate portion 111. Although each of the plurality of pins 113 is a pin with a head in the present embodiment, a columnar pin may be fitted into flat plate portion 111 and thereafter a portion protruding from an upper surface of flat plate portion 111 may be riveted.

Each of flat plate portion 111 and the plurality of pins 113 is made of a steel material such as stainless steel or a resin material such as fiber-reinforced plastic.

As shown in Figs. 7 and 8, in a seedbed group 10, a plurality of seedbeds 11 arranged at regular spacings in the width direction (X axis direction) of plant transplantation apparatus 100 are continuous in a matrix manner. A seedling 19 is arranged in each of the plurality of seedbeds 11.

Specifically, seedbed group 10 has a substantially rectangular parallelepiped outer shape and has grid-like cut lines intermittently. Seedbeds 11 adjacent to each other are connected to each other at an intermittent portion 12c of a cut line 12 extending in the width direction (X axis direction) of plant transplantation apparatus 100, and are connected to each other at an intermittent portion 13c of a cut line 13 extending in the depth direction (Y axis direction) of plant transplantation apparatus 100.

In a planar view, intermittent portion 12c and intermittent portion 13c are provided at the central position of each of the four sides forming the outer shape of one seedbed 11. Each of intermittent portion 12c and intermittent portion 13c extends in the height direction (Z axis direction) of plant transplantation apparatus 100. A recessed portion 14 configured to house a seedling is provided in an upper portion of each of the plurality of seedbeds 11. Seedbed 11 is made of sponge-like polyurethane.

The plurality of pins 113 of first seedbed holding member 110a, second seedbed holding member 110b and third seedbed holding member 110c are inserted into the grid-like cut lines of seedbed groups 10, respectively, and thereby, seedling 19 is positioned inside each of the plurality of through hole portions 112 of first seedbed holding member 110a, second seedbed holding member 110b and third seedbed holding member 110c as shown in Fig. 9. In this state, one seedbed 11 is held by four pins 113 positioned at the four corners in a planar view.

Seedbed group 10 held in first seedbed holding member 110a is housed in first housing portion 119a of seedbed supporting member 119. The plurality of through hole portions 112 of first seedbed holding member 110a face the plurality of through hole portions 119h at the bottom of first housing portion 119a, respectively. The plurality of pins 113 of first seedbed holding member 110a are in contact with the bottom of first housing portion 119a.

Seedbed group 10 held in second seedbed holding member 110b is housed in second housing portion 119b of seedbed supporting member 119. The plurality of through hole portions 112 of second seedbed holding member 110b face the plurality of through hole portions 119h at the bottom of second housing portion 119b, respectively. The plurality of pins 113 of second seedbed holding member 110b are in contact with the bottom of second housing portion 119b.

Seedbed group 10 held in third seedbed holding member 110c is housed in third housing portion 119c of seedbed supporting member 119. The plurality of through hole portions 112 of third seedbed holding member 110c face the plurality of through hole portions 119h at the bottom of third housing portion 119c, respectively. The plurality of pins 113 of third seedbed holding member 110c are in contact with the bottom of third housing portion 119c.

When the housing portion of the seedbed holding member is formed to have a frame shape, a perimeter edge of the flat plate portion of the seedbed supporting member is placed on the entire perimeter of the housing portion.

Panel supporting member 150 supports a first panel 120a, a second panel 120b and a third panel 120c described below in a state where first panel 120a, second panel 120b and third panel 120c are spaced apart from one another and aligned in the width direction (X axis direction) of plant transplantation apparatus 100.

Specifically, panel supporting member 150 is formed of four flat plates and is attached to frame 140 such that an arrangement spacing between the flat plates in the width direction (X axis direction) of plant transplantation apparatus 100 can be changed. Panel supporting member 150 supports an edge portion of each of first panel 120a, second panel 120b and third panel 120c. In the present embodiment, the edge portion of each of first panel 120a, second panel 120b and third panel 120c is placed on panel supporting member 150.

Panel supporting member 150 is made of a steel material such as stainless steel or a resin material such as fiber-reinforced plastic.

A configuration of each of first panel 120a, second panel 120b and third panel 120c will now be described. Fig. 10 is a plan view showing an outer appearance of one example of the panel. Fig. 11 is a cross-sectional view of the panel in Fig. 11 viewed from an XI-XI line arrow direction. In Figs. 10 and 11, the width direction of the plant transplantation apparatus which is the first direction is shown as the X axis direction, the depth direction of the plant transplantation apparatus is shown as the Y axis direction, and the height direction of the plant transplantation apparatus is shown as the Z axis direction.

As shown in Figs. 10 and 11, in each of first panel 120a, second panel 120b and third panel 120c, a plurality of through hole portions 122 are provided in a base 121 on the flat plate in a matrix manner at regular spacings in the width direction (X axis direction) of plant transplantation apparatus 100. In the description of the present embodiment, the matrix manner also includes a state in which an arrangement of rows adjacent to each other and an arrangement of columns adjacent to each other are alternately displaced sequentially as shown in Fig. 10.

Specifically, the plurality of through hole portions 122 are arranged at a spacing P3 in the width direction (X axis direction) of plant transplantation apparatus 100 and are arranged at a spacing P4 in the depth direction (Y axis direction) of plant transplantation apparatus 100. Spacing P3 and spacing P4 may be equal to or different from each other. Spacing P3 is longer than spacing P1 and spacing P4 is longer than spacing P2.

Each of the plurality of through hole portions 122 is formed by an upper-side hole portion 122a provided on the upper surface side of base 121 and having a diameter enlarged from the bottom to the top, and a lower-side hole portion 122b provided on the lower surface side of base 121 and having a constant diameter. Base 121 is made of a synthetic resin such as expanded polystyrene.

First transplantation arm 130a moves seedbeds 11 one by one in the vertical direction from seedbed group 10 held in first seedbed holding member 110a, and transfers seedbeds 11 to the plurality of through hole portions 122 of first panel 120a, respectively.

Second transplantation arm 130b moves seedbeds 11 one by one in the vertical direction from seedbed group 10 held in second seedbed holding member 110b, and transfers seedbeds 11 to the plurality of through hole portions 122 of second panel 120b, respectively. Second transplantation arm 130b is spaced apart from first transplantation arm 130a in the width direction (X axis direction) of plant transplantation apparatus 100.

Third transplantation arm 130c moves seedbeds 11 one by one in the vertical direction from seedbed group 10 held in third seedbed holding member 110c, and transfers seedbeds 11 to the plurality of through hole portions 122 of third panel 120c, respectively. Third transplantation arm 130c is spaced apart from second transplantation arm 130b in the width direction (X axis direction) of plant transplantation apparatus 100.

First transplantation arm 130a, second transplantation arm 130b and third transplantation arm 130c are arranged at a spacing P5 in the width direction (X axis direction) of plant transplantation apparatus 100. That is, as to the central axis of first transplantation arm 130a, the central axis of second transplantation arm 130b and the central axis of third transplantation arm 130c that are each parallel to the height direction (Z axis direction) of plant transplantation apparatus 100, the spacing between the central axis of first transplantation arm 130a and the central axis of second transplantation arm 130b is P5, and the spacing between the central axis of second transplantation arm 130b and the central axis of third transplantation arm 130c is P5.

First transplantation arm 130a, second transplantation arm 130b and third transplantation arm 130c are configured to be all connected to one second horizontal movement mechanism so as to move horizontally in an integral manner. Specifically, each of first transplantation arm 130a, second transplantation arm 130b and third transplantation arm 130c is connected to a supporting portion 139 extending in the width direction (X axis direction) of plant transplantation apparatus 100. Supporting portion 139 is connected to the second horizontal movement mechanism.

The second horizontal movement mechanism is formed by a transverse direction linear actuator 170x configured to move supporting portion 139 in the width direction (X axis direction) of plant transplantation apparatus 100, and a longitudinal direction linear actuator 170y configured to move supporting portion 139 in the depth direction (Y axis direction) of plant transplantation apparatus 100. The second horizontal movement mechanism simultaneously changes the position of each of first transplantation arm 130a, second transplantation arm 130b and third transplantation arm 130c in the horizontal direction.

First transplantation arm 130a, second transplantation arm 130b and third transplantation arm 130c are configured to be connected to the vertical movement mechanisms, respectively, so as to be separately vertically movable. Specifically, first transplantation arm 130a is connected to a height direction linear actuator 170a configured to move first transplantation arm 130a in the height direction (Z axis direction) of plant transplantation apparatus 100. Second transplantation arm 130b is connected to a height direction linear actuator 170b configured to move second transplantation arm 130b in the height direction (Z axis direction) of plant transplantation apparatus 100. Third transplantation arm 130c is connected to a height direction linear actuator 170b configured to move third transplantation arm 130c in the height direction (Z axis direction) of plant transplantation apparatus 100.

A configuration of each of first transplantation arm 130a, second transplantation arm 130b and third transplantation arm 130c will now be described in detail. The following description provides one example of the configuration of the transplantation arm. As long as the transplantation arm can move seedbeds 11 one by one, the configuration of the transplantation arm is not limited to the described configuration.

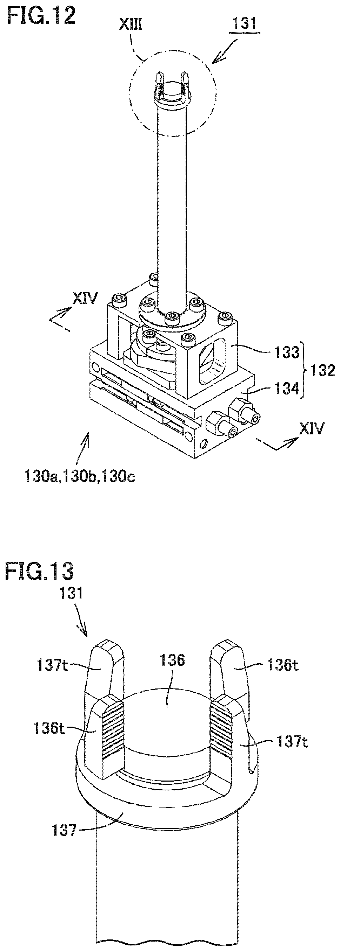

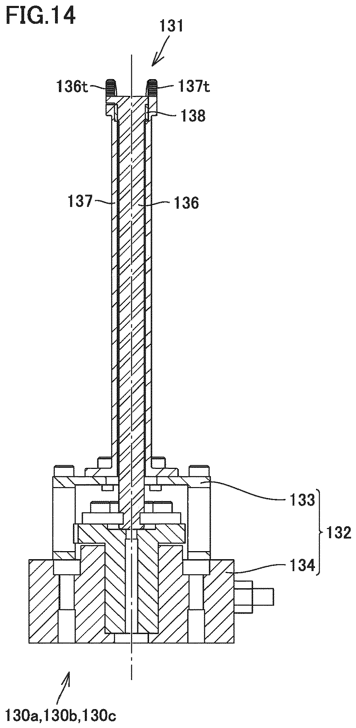

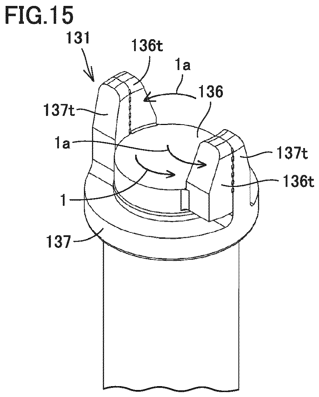

Fig. 12 is a perspective view showing an outer appearance of the transplantation arm included in the plant transplantation apparatus according to one embodiment of the present invention. Fig. 13 is an enlarged perspective view showing an XIII portion of the transplantation arm in Fig. 12. Fig. 14 is a cross-sectional view of the transplantation arm in Fig. 12 viewed from an XIV-XIV line arrow direction. Fig. 15 is a perspective view showing a state in which a gripping portion of the transplantation arm included in the plant transplantation apparatus according to one embodiment of the present invention is closed. Fig. 15 shows the state in a perspective view viewed from the same direction as that of Fig. 13.

As shown in Figs. 12 to 15, each of first transplantation arm 130a, second transplantation arm 130b and third transplantation arm 130c includes a gripping portion 131 and a base portion 132. Gripping portion 131 is positioned above base portion 132. Base portion 132 includes a support platform 133 and a rotary driving portion 134. Support platform 133 is arranged on rotary driving portion 134.

Rotary driving portion 134 is connected to a substantially columnar shaft portion 136 extending in the height direction (Z axis direction) of plant transplantation apparatus 100. Rotary driving portion 134 rotates shaft portion 136 around the central axis of shaft portion 136. On an outer circumferential surface of an upper end portion of shaft portion 136, two tab portions 136t are provided so as to protrude upward. Two tab portions 136t are provided at positions opposite to each other with respect to the center of shaft portion 136 in the radial direction of shaft portion 136.

Support platform 133 supports a cylindrical portion 137 extending in the height direction (Z axis direction) of plant transplantation apparatus 100. Support platform 133 has a substantially rectangular parallelepiped outer shape and a through hole through which cylindrical portion 137 is inserted is provided at the center of a ceiling portion of support platform 133. On an upper end surface of an upper end portion of cylindrical portion 137, two tab portions 137t are provided so as to protrude upward. Two tab portions 137t are provided at positions opposite to each other with respect to the center of cylindrical portion 137 in the radial direction of cylindrical portion 137.

Shaft portion 136 is inserted into cylindrical portion 137. A bearing 138 is arranged between an inner circumferential surface of the upper end portion of cylindrical portion 137 and the outer circumferential surface of the upper end portion of shaft portion 136. Two tab portions 136t of shaft portion 136 and two tab portions 137t of cylindrical portion 137 are positioned on the same circumference centered at the central axis of shaft portion 136.

Rotary driving portion 134 is driven to rotate shaft portion 136 in the circumferential direction of shaft portion 136 as indicated by an arrow 1, and thereby, each of two tab portions 136t of shaft portion 136 rotates in the circumferential direction of shaft portion 136 as indicated by an arrow 1a. Since the positions of two tab portions 137t of cylindrical portion 137 are fixed, one of two tab portions 136t abuts one of two tab portions 137t and the other of two tab portions 136t abuts the other of two tab portions 137t when two tab portions 136t of shaft portion 136 rotate. As described above, gripping portion 131 is configured such that seedbed 11 can be sandwiched between tab portions 136t and tab portions 137t.

An arrangement relationship among first seedbed holding member 110a, first panel 120a and first transplantation arm 130a, an arrangement relationship among second seedbed holding member 110b, second panel 120b and second transplantation arm 130b, and an arrangement relationship among third seedbed holding member 110c, third panel 120c and third transplantation arm 130c will now be described.

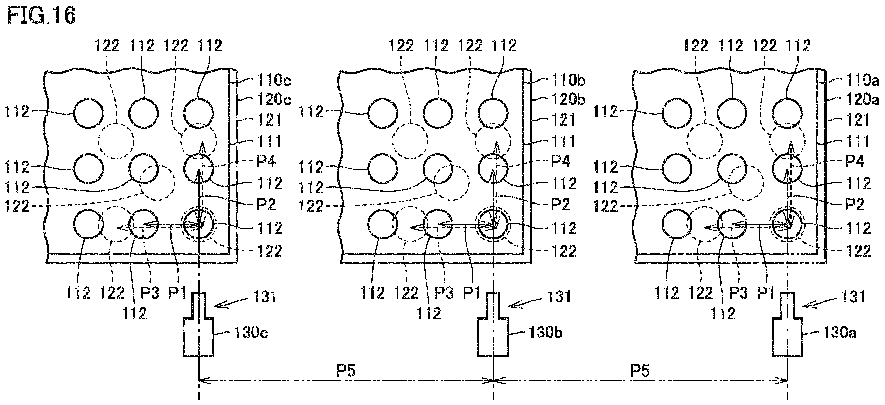

Fig. 16 is a plan view showing an arrangement relationship among the first seedbed holding member, the first panel and the first transplantation arm, an arrangement relationship among the second seedbed holding member, the second panel and the second transplantation arm, and an arrangement relationship among the third seedbed holding member, the third panel and the third transplantation arm in the plant transplantation apparatus according to one embodiment of the present invention. In Fig. 16, the first transplantation arm, the second transplantation arm and the third transplantation arm are shown in a changed position and orientation.

In plant transplantation apparatus 100 according to the present embodiment, in order to transplant seedbed 11 held at the corner of first seedbed holding member 110a into through hole portion 122 positioned at the corner of first panel 120a, for example, through hole portion 112 positioned at the corner of first seedbed holding member 110a and through hole portion 122 positioned at the corner of first panel 120a are arranged to overlap with each other in the vertical direction, and first transplantation arm 130a is arranged directly therebelow as shown in Fig. 16.

At this time, through hole portion 112 positioned at the corner of second seedbed holding member 110b and through hole portion 122 positioned at the corner of second panel 120b are arranged to overlap with each other in the vertical direction, and second transplantation arm 130b is arranged directly therebelow. Through hole portion 112 positioned at the corner of third seedbed holding member 110c and through hole portion 122 positioned at the corner of third panel 120c are arranged to overlap with each other in the vertical direction, and third transplantation arm 130c is arranged directly therebelow.

That is, seedbed supporting member 119 and panel supporting member 150 are configured such that, in a state where one seedbed 11 of seedbed group 10 held in first seedbed holding member 110a and one through hole portion 122 of first panel 120a overlap with each other when viewed from the vertical direction, one seedbed 11 of seedbed group 10 held in second seedbed holding member 110b and one through hole portion 122 of second panel 120b, which correspond to this seedbed 11 and this through hole portion 122, respectively, overlap with each other.

Similarly, seedbed supporting member 119 and panel supporting member 150 are configured such that, in a state where one seedbed 11 of seedbed group 10 held in first seedbed holding member 110a and one through hole portion 122 of first panel 120a overlap with each other when viewed from the vertical direction, one seedbed 11 of seedbed group 10 held in third seedbed holding member 110c and one through hole portion 122 of third panel 120c, which correspond to this seedbed 11 and this through hole portion 122, respectively, overlap with each other.

In addition, an arrangement spacing in the width direction (X axis direction) of plant transplantation apparatus 100 between through hole portion 122 of first panel 120a and through hole portion 122 of second panel 120b corresponding to each other is equal to an arrangement spacing in the width direction (X axis direction) of plant transplantation apparatus 100 between first transplantation arm 130a and second transplantation arm 130b.

Similarly, an arrangement spacing in the width direction (X axis direction) of plant transplantation apparatus 100 between through hole portion 122 of second panel 120b and through hole portion 122 of third panel 120c corresponding to each other is equal to an arrangement spacing in the width direction (X axis direction) of plant transplantation apparatus 100 between second transplantation arm 130b and third transplantation arm 130c.

Specifically, so as to achieve the above-described arrangement relationship, an arrangement spacing between first housing portion 119a, second housing portion 119b and third housing portion 119c in seedbed supporting member 119, an arrangement spacing between first panel 120a, second panel 120b and third panel 120c in panel supporting member 150, and arrangement spacing P5 between first transplantation arm 130a, second transplantation arm 130b and third transplantation arm 130c in supporting portion 139 are determined in the width direction (X axis direction) of plant transplantation apparatus 100.

Controller 170 is fixed to frame 140. Controller 170 controls the operation of each of the first horizontal movement mechanism, the second horizontal movement mechanism, the vertical movement mechanisms, and rotary driving portion 134.

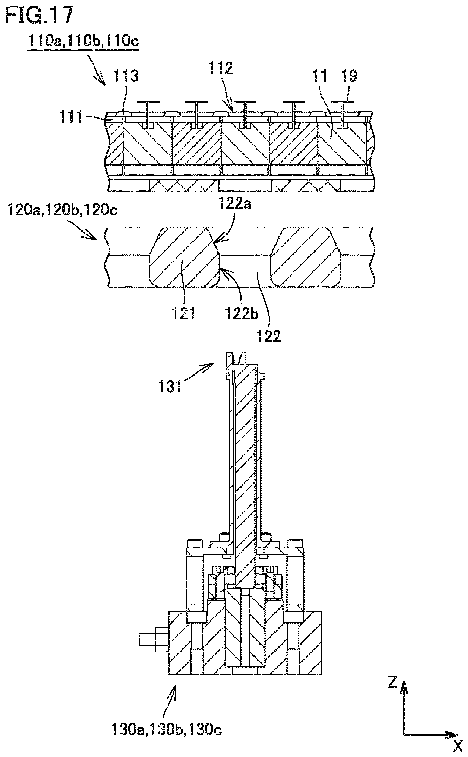

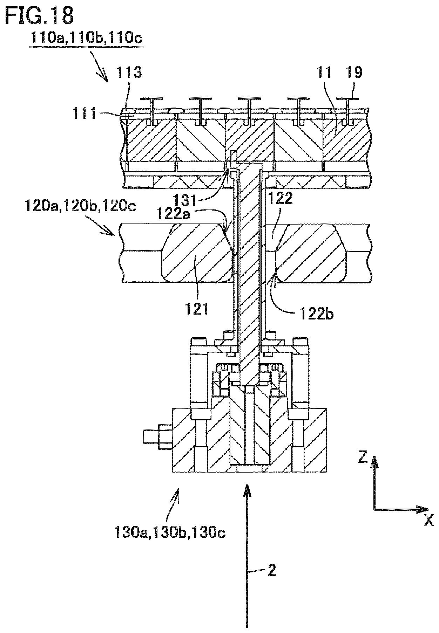

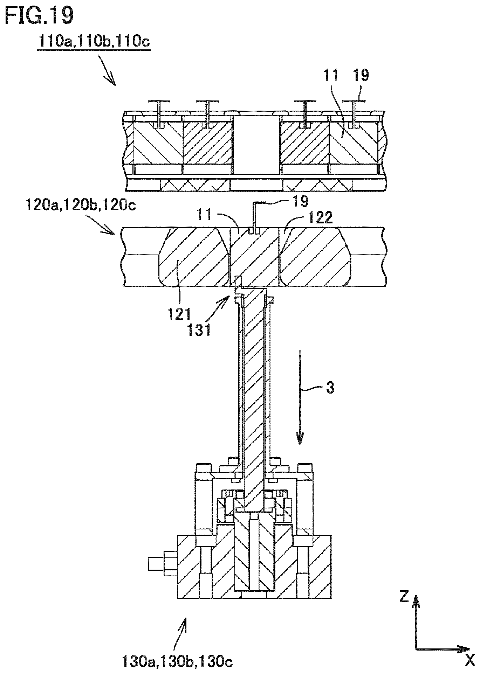

The operation of plant transplantation apparatus 100 according to one embodiment of the present invention will be described below. Fig. 17 is a cross-sectional view showing a state in which the seedbed to be transplanted and the through hole portion of the panel which is a transplantation destination are arranged to overlap with each other, and the transplantation arm is arranged directly therebelow in the plant transplantation apparatus according to one embodiment of the present invention. Fig. 18 is a cross-sectional view showing a state in which the transplantation arm has moved upward and the gripping portion has passed through the through hole portion of the panel and gripped the seedbed in the plant transplantation apparatus according to one embodiment of the present invention. Fig. 19 is a cross-sectional view showing a state in which the transplantation arm has moved downward and transplanted the seedbed into the through hole portion of the panel in the plant transplantation apparatus according to one embodiment of the present invention.

As shown in Fig. 17, seedbed supporting member 119 is first moved by the first horizontal movement mechanism such that seedbed 11 to be transplanted, of seedbed group 10 held in each of first seedbed holding member 110a, second seedbed holding member 110b and third seedbed holding member 110c overlaps with through hole portion 122 of each of first panel 120a, second panel 120b and third panel 120c which is a transplantation destination, when viewed from the height direction (Z axis direction) of plant transplantation apparatus 100.

Supporting portion 139 is moved by the second horizontal movement mechanism such that gripping portion 131 of first transplantation arm 130a is positioned directly below through hole portion 122 of first panel 120a which is a transplantation destination, gripping portion 131 of second transplantation arm 130b is positioned directly below through hole portion 122 of second panel 120b which is a transplantation destination, and gripping portion 131 of third transplantation arm 130c is positioned directly below through hole portion 122 of third panel 120c which is a transplantation destination.

As shown in Fig. 18, the vertical movement mechanism for each of first transplantation arm 130a, second transplantation arm 130b and third transplantation arm 130c is operated to move first transplantation arm 130a, second transplantation arm 130b and third transplantation arm 130c upward as indicated by an arrow 2.

As a result, with gripping portion 131 of first transplantation arm 130a being open, gripping portion 131 of first transplantation arm 130a passes through through hole portion 122 of first panel 120a and through hole portion 119h of first housing portion 119a, and comes into contact with a lower portion of seedbed 11. With gripping portion 131 of second transplantation arm 130b being open, gripping portion 131 of second transplantation arm 130b passes through through hole portion 122 of second panel 120b and through hole portion 119h of second housing portion 119b, and comes into contact with a lower portion of seedbed 11. With gripping portion 131 of third transplantation arm 130c being open, gripping portion 131 of third transplantation arm 130c passes through through hole portion 122 of third panel 120c and through hole portion 119h of third housing portion 119c, and comes into contact with a lower portion of seedbed 11.

Next, rotary driving portion 134 is operated in each of first transplantation arm 130a, second transplantation arm 130b and third transplantation arm 130c to grip seedbed 11 by gripping portion 131.

As shown in Fig. 19, the vertical movement mechanism for each of first transplantation arm 130a, second transplantation arm 130b and third transplantation arm 130c is operated to move each of first transplantation arm 130a, second transplantation arm 130b and third transplantation arm 130c downward as indicated by an arrow 3.

As a result, with gripping portion 131 of first transplantation arm 130a gripping seedbed 11, gripping portion 131 of first transplantation arm 130a exits from through hole portion 119h of first housing portion 119a, and tears off only gripped seedbed 11 from seedbed group 10 and houses seedbed 11 in through hole portion 122 of first panel 120a. With gripping portion 131 of second transplantation arm 130b gripping seedbed 11, gripping portion 131 of second transplantation arm 130b exits from through hole portion 119h of second housing portion 119b, and tears off only gripped seedbed 11 from seedbed group 10 and houses seedbed 11 in through hole portion 122 of second panel 120b. With gripping portion 131 of third transplantation arm 130 gripping seedbed 11, gripping portion 131 of third transplantation arm 130 exits from through hole portion 119h of third housing portion 119c, and tears off only gripped seedbed 11 from seedbed group 10 and houses seedbed 11 in through hole portion 122 of third panel 120c.

Next, rotary driving portion 134 is driven in the opposite direction in each of first transplantation arm 130a, second transplantation arm 130b and third transplantation arm 130c to release gripping of seedbed 11 by gripping portion 131.

Thereafter, the vertical movement mechanism for each of first transplantation arm 130a, second transplantation arm 130b and third transplantation arm 130c is operated to further move each of first transplantation arm 130a, second transplantation arm 130b and third transplantation arm 130c downward as indicated by arrow 3.

The above-described series of operation is repeated, and thereby, the seedbeds of seedbed group 10 can be transplanted one by one into the through hole portions of the panels.

Although plant transplantation apparatus 100 according to the present embodiment is configured such that seedbed supporting member 119 is positioned above panel supporting member 150 and the transplantation arm gripping seedbed 11 moves downward to house seedbed 11 in the through hole portion of the panel, the configuration of plant transplantation apparatus 100 is not limited thereto. Plant transplantation apparatus 100 may be configured such that seedbed supporting member 119 is positioned below panel supporting member 150 and the transplantation arm gripping seedbed 11 moves upward to house seedbed 11 in the through hole portion of the panel.

In addition, in plant transplantation apparatus 100 according to the present embodiment, first transplantation arm 130a, second transplantation arm 130b and third transplantation arm 130c are connected to the separate vertical movement mechanisms, respectively. However, first transplantation arm 130a, second transplantation arm 130b and third transplantation arm 130c may be configured to be connected to one vertical movement mechanism so as to move vertically in an integral manner. In this case, the number of the height direction linear actuators can be reduced, and thus, the manufacturing cost of plant transplantation apparatus 100 can be reduced.

On the other hand, in a case where first transplantation arm 130a, second transplantation arm 130b and third transplantation arm 130c are connected to the separate vertical movement mechanisms, respectively, only the vertical movement mechanism for any of first transplantation arm 130a, second transplantation arm 130b and third transplantation arm 130c that has gripped a seedbed of a defective seedling is not operated during transplantation with sorting of seedlings 19 in accordance with the growth conditions, and thus, transplantation of the seedbed of the defective seedling can be prevented.

In plant transplantation apparatus 100 according to the present embodiment, the three transplantation arms are used to simultaneously transplant the seedbeds into the three panels, and thus, the efficiency of the transplantation work can be enhanced threefold. In addition, one transplantation arm is used for one panel to transplant the seedbeds, and thus, the time required for transplantation into the three panels is the same as the time required for transplantation into one panel in a conventional plant transplantation apparatus in which only one transplantation arm is used to transplant seedbeds into one panel. Therefore, it is unnecessary for an operator to more frequently access plant transplantation apparatus 100 and remove the three panels in which transplantation of seedbeds 11 has ended in order to continue the transplantation work, and an increase in operator's burden can be suppressed.

In plant transplantation apparatus 100 according to the present embodiment, first transplantation arm 130a, second transplantation arm 130b and third transplantation arm 130c are configured to be connected to one second horizontal movement mechanism so as to move horizontally in an integral manner. Therefore, the number of the transverse direction linear actuators and the longitudinal direction linear actuators can be reduced and the manufacturing cost of plant transplantation apparatus 100 can be reduced. In addition, control of the second horizontal movement mechanism by controller 170 is facilitated.

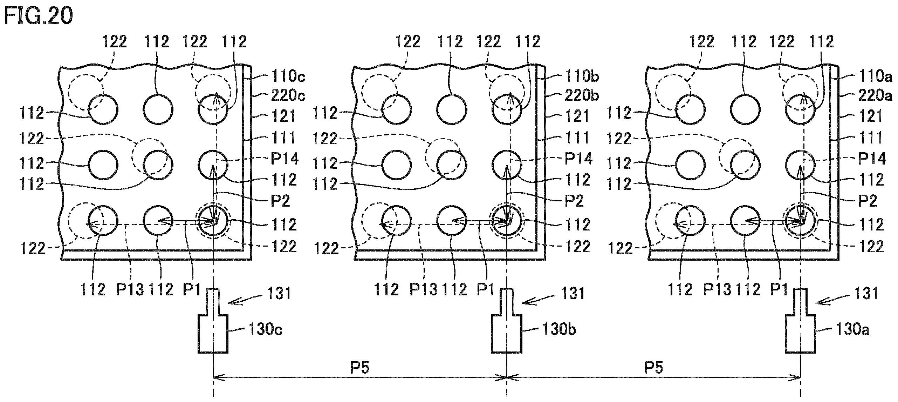

In plant transplantation apparatus 100 according to the present embodiment, seedbed 11 can be similarly transplanted into a panel having a different arrangement spacing between the plurality of through hole portions 122. Fig. 20 is a plan view showing an arrangement relationship among the first seedbed holding member, the first panel and the first transplantation arm, an arrangement relationship among the second seedbed holding member, the second panel and the second transplantation arm, and an arrangement relationship among the third seedbed holding member, the third panel and the third transplantation arm when an arrangement spacing between the plurality of through hole portions of the panel is changed, in the plant transplantation apparatus according to one embodiment of the present invention. Fig. 20 shows the first transplantation arm, the second transplantation arm and the third transplantation arm in a changed position and orientation.

As shown in Fig. 20, in each of first panel 120a, second panel 120b and third panel 120c, the plurality of through hole portions 122 are arranged at a spacing P13 in the width direction (X axis direction) of plant transplantation apparatus 100 and are arranged at a spacing P14 in the depth direction (Y axis direction) of plant transplantation apparatus 100. Although Fig. 20 shows a case in which spacing P13 is longer than spacing P3 and spacing P14 is longer than spacing P4, spacing P13 may be shorter than spacing P3 and spacing P14 may be shorter than spacing P4.

Even in the case of using such first panel 120a, second panel 120b and third panel 120c, in plant transplantation apparatus 100 according to the present embodiment, in order to transplant seedbed 11 held at the corner of first seedbed holding member 110a into through hole portion 122 positioned at the corner of first panel 120a, for example, through hole portion 112 positioned at the corner of second seedbed holding member 110b and through hole portion 122 positioned at the corner of second panel 120b are arranged to overlap with each other in the vertical direction and second transplantation arm 130b is arranged directly therebelow, and through hole portion 112 positioned at the corner of third seedbed holding member 110c and through hole portion 122 positioned at the corner of third panel 120c are arranged to overlap with each other in the vertical direction and third transplantation arm 130c is arranged directly therebelow, when through hole portion 112 positioned at the corner of first seedbed holding member 110a and through hole portion 122 positioned at the corner of first panel 120a are arranged to overlap with each other in the vertical direction and first transplantation arm 130a is arranged directly therebelow as shown in Fig. 20.

In plant transplantation apparatus 100 according to the present embodiment, seedbed supporting member 119 supports first seedbed holding member 110a, second seedbed holding member 110b and third seedbed holding member 110c in a state where first seedbed holding member 110a, second seedbed holding member 110b and third seedbed holding member 110c are spaced apart from one another and aligned in the first direction, and panel supporting member 150 supports first panel 120a, second panel 120b and third panel 120c in a state where first panel 120a, second panel 120b and third panel 120c are spaced apart from one another and aligned in the first direction. Therefore, the above-described arrangement relationship can be maintained.

Even when the size of the outer shape of each of first panel 120a, second panel 120b and third panel 120c increases in accordance with a change in arrangement spacing between the plurality of through hole portions 122, each of a gap between first seedbed holding member 110a and second seedbed holding member 110b, a gap between second seedbed holding member 110b and third seedbed holding member 110c, a gap between first panel 120a and second panel 120b, and a gap between second panel 120b and third panel 120c functions as an adjustment section that changes in accordance with the change in outer shape dimension of each panel in the width direction (X axis direction) of plant transplantation apparatus 100. Therefore, the above-described arrangement relationship can be maintained.

Accordingly, plant transplantation apparatus 100 according to the present embodiment can be adapted to various seedlings with increased flexibility of the spacing between the through hole portions of the panel into which the seedbed is transplanted, and can suppress an increase in operator's burden while enhancing the work efficiency.

In plant transplantation apparatus 100, panel supporting member 150 may support the panels in a state where the panels are spaced apart from one another and aligned in the depth direction (Y axis direction) of plant transplantation apparatus 100. Specifically, in a modification of plant transplantation apparatus 100, at least two rows of panel supporting members 150 are provided to be spaced apart from each other in the depth direction (Y axis direction) of plant transplantation apparatus 100. For example, first panel 120a, second panel 120b and third panel 120c are supported by panel supporting member 150 on the front row side, and a fourth panel, a fifth panel and a sixth panel having configurations similar to those of first panel 120a, second panel 120b and third panel 120c, respectively, are supported by panel supporting member 150 on the back row side.

In the modification of plant transplantation apparatus 100, seedbed supporting member 119 further has a fourth housing portion, a fifth housing portion and a sixth housing portion provided to be spaced apart from first housing portion 119a, second housing portion 119b and third housing portion 119c, respectively, in the depth direction (Y axis direction) of plant transplantation apparatus 100 so as to correspond to the above-described arrangement of the panels. The fourth housing portion, the fifth housing portion and the sixth housing portion have configurations similar to those of first housing portion 119a, second housing portion 119b and third housing portion 119c, respectively, and are provided at substantially equal spacings in the width direction (X axis direction) of plant transplantation apparatus 100. Seedbed group 10 held in a fourth seedbed holding member is housed in the fourth housing portion. Seedbed group 10 held in a fifth seedbed holding member is housed in the fifth housing portion. Seedbed group 10 held in a sixth seedbed holding member is housed in the sixth housing portion. The fourth seedbed holding member, the fifth seedbed holding member and the sixth seedbed holding member have configurations similar to those of first seedbed holding member 110a, second seedbed holding member 110b and third seedbed holding member 110c, respectively.

In the modification of plant transplantation apparatus 100, a fourth transplantation arm, a fifth transplantation arm and a sixth transplantation arm having configurations similar to those of first transplantation arm 130a, second transplantation arm 130b and third transplantation arm 130c, respectively, are further provided so as to correspond to the above-described arrangement of the panels. The fourth transplantation arm, the fifth transplantation arm and the sixth transplantation arm are arranged at spacing P5 in the width direction (X axis direction) of plant transplantation apparatus 100. First transplantation arm 130a, second transplantation arm 130b, third transplantation arm 130c, the fourth transplantation arm, the fifth transplantation arm, and the sixth transplantation arm are configured to be all connected to one second horizontal movement mechanism so as to move horizontally in an integral manner. The fourth transplantation arm, the fifth transplantation arm and the sixth transplantation arm are configured to be connected to the vertical movement mechanisms, respectively, so as to be separately vertically movable.

In the modification of plant transplantation apparatus 100, first transplantation arm 130a, second transplantation arm 130b, third transplantation arm 130c, the fourth transplantation arm, the fifth transplantation arm, and the sixth transplantation arm are arranged such that, in a state where seedbed 11 to be transplanted, of seedbed group 10 held in each of first seedbed holding member 110a, second seedbed holding member 110b, third seedbed holding member 110c, the fourth seedbed holding member, the fifth seedbed holding member, and the sixth seedbed holding member is arranged to overlap with through hole portion 122 of each of first panel 120a, second panel 120b, third panel 120c, the fourth panel, the fifth panel, and the sixth panel when viewed from the height direction (Z axis direction) of plant transplantation apparatus 100, first transplantation arm 130a, second transplantation arm 130b, third transplantation arm 130c, the fourth transplantation arm, the fifth transplantation arm, and the sixth transplantation arm can be arranged directly below these overlapping positions, respectively.

With the above-described configuration, in the modification of plant transplantation apparatus 100, seedbed 11 can be similarly transplanted into a panel having a different arrangement spacing between the plurality of through hole portions 122 in the depth direction (Y axis direction) of plant transplantation apparatus 100. Even when the size of the outer shape of each of first panel 120a, second panel 120b, third panel 120c, the fourth panel, the fifth panel, and the sixth panel increases in accordance with a change in arrangement spacing between the plurality of through hole portions 122 in the depth direction (Y axis direction) of plant transplantation apparatus 100, each of a gap between first seedbed holding member 110a and the fourth seedbed holding member, a gap between second seedbed holding member 110b and the fifth seedbed holding member, a gap between third seedbed holding member 110c and the sixth seedbed holding member, a gap between first panel 120a and the fourth panel, a gap between second panel 120b and the fifth panel, and a gap between third panel 120c and the sixth panel functions as an adjustment section that changes in accordance with the change in outer shape dimension of each panel in the depth direction (Y axis direction) of plant transplantation apparatus 100. Therefore, the above-described arrangement relationship can be maintained.

In the modification of plant transplantation apparatus 100, the six transplantation arms are used to simultaneously transplant the seedbeds into the six panels, and thus, the efficiency of the transplantation work can be enhanced sixfold. Therefore, the modification of plant transplantation apparatus 100 can be adapted to various seedlings with further increased flexibility of the spacing between the through hole portions of the panel into which the seedbed is transplanted, and can suppress an increase in operator's burden while enhancing the work efficiency. The number of panels arranged in the width direction (X axis direction) of plant transplantation apparatus 100 and in the depth direction (Y axis direction) of plant transplantation apparatus 100 according to the modification is not limited to the above-described number, and two or more panels may only be arranged in each direction.

It should be understood that the embodiment disclosed herein is illustrative and not limitative in any respect. The scope of the present invention is defined by the terms of the claims, rather than the description above, and is intended to include any modifications within the scope and meaning equivalent to the terms of the claims.

### REFERENCE SIGNS LIST

10 seedbed group; 11 seedbed; 12, 13 cut line; 12c, 13c intermittent portion; 14 recessed portion; 19 seedling; 100 plant transplantation apparatus; 110a first seedbed holding member; 110b second seedbed holding member; 110c third seedbed holding member; 111 flat plate portion; 112, 119h, 122 through hole portion; 113 pin; 119 seedbed supporting member; 119a first housing portion; 119b second housing portion; 119c third housing portion; 119m main body portion; 120a first panel; 120b second panel; 120c third panel; 121 base; 122a upper-side hole portion; 122b lower-side hole portion; 130, 130c third transplantation arm; 130a first transplantation arm; 130b second transplantation arm; 131 gripping portion; 132 base portion; 133 support platform; 134 rotary driving portion; 136 shaft portion; 136t, 137t tab portion; 137 cylindrical portion; 138 bearing; 139 supporting portion; 140 frame; 141 caster; 150 panel supporting member; 160x, 160y, 170a, 170b, 170x, 170y linear actuator; 170 controller.

## Claims

1. A plant transplantation apparatus that transfers seedbeds from a first seedbed holding member and a second seedbed holding member to a first panel and a second panel, respectively, the first seedbed holding member being configured to hold a seedbed group in which a plurality of seedbeds arranged at regular spacings in a first direction are continuous in a matrix manner, the second seedbed holding member having a configuration identical to that of the first seedbed holding member, the first panel having a plurality of through hole portions provided in a matrix manner at regular spacings in the first direction, the second panel having a configuration identical to that of the first panel, the plant transplantation apparatus comprising:
a seedbed supporting member configured to support the first seedbed holding member and the second seedbed holding member in a state where the first seedbed holding member and the second seedbed holding member are spaced apart from each other and aligned in the first direction;
a panel supporting member configured to support the first panel and the second panel in a state where the first panel and the second panel are spaced apart from each other and aligned in the first direction;
a first transplantation arm configured to move the seedbeds one by one in a vertical direction from the seedbed group held in the first seedbed holding member, and transfer the seedbeds to the plurality of through hole portions of the first panel, respectively;
a second transplantation arm spaced apart from the first transplantation arm in the first direction and configured to move the seedbeds one by one in the vertical direction from the seedbed group held in the second seedbed holding member, and transfer the seedbeds to the plurality of through hole portions of the second panel, respectively; and
a first horizontal movement mechanism configured to change a relative positional relationship in a horizontal direction between the seedbed supporting member and the panel supporting member,
the seedbed supporting member and the panel supporting member being configured such that, in a state where one seedbed of the seedbed group held in the first seedbed holding member and one through hole portion of the first panel overlap with each other when viewed from the vertical direction, one seedbed of the seedbed group held in the second seedbed holding member and one through hole portion of the second panel, which correspond to the seedbed and the through hole portion, respectively, overlap with each other,
an arrangement spacing in the first direction between the through hole portion of the first panel and the through hole portion of the second panel corresponding to each other being equal to an arrangement spacing in the first direction between the first transplantation arm and the second transplantation arm.

2. The plant transplantation apparatus according to claim 1, wherein
the first transplantation arm and the second transplantation arm are configured to be both connected to one second horizontal movement mechanism so as to move horizontally in an integral manner.

3. The plant transplantation apparatus according to claim 1 or 2, wherein
the panel supporting member is fixedly arranged so as to support an edge portion of each of the first panel and the second panel, and
the seedbed supporting member is configured to be connected to the first horizontal movement mechanism so as to be horizontally movable.

4. The plant transplantation apparatus according to any one of claims 1 to 3, wherein
the seedbed supporting member is positioned above the panel supporting member.

5. The plant transplantation apparatus according to any one of claims 1 to 4, wherein
the first transplantation arm and the second transplantation arm are configured to be connected to vertical movement mechanisms, respectively, so as to be separately vertically movable.
